# EUROPEAN PATENT SPECIFICATION

(11) **EP 2 832 997 B1**
(45) Date of publication and mention of the grant of the patent: **10.05.2017**
(21) Application number: 13769325.5
(22) Date of filing: 25.03.2013
(51) Int. Cl.: F04B 27/08, F04B 27/10, F04B 39/02, F16C 33/66, F16C 33/10, F16C 33/20, F16C 17/04, F16H 23/00

(54) **SWASH PLATE**
TAUMELSCHEIBE
PLATEAU OSCILLANT

(30) Priority: 29.03.2012 JP 2012077531
(43) Date of publication of application: 04.02.2015
(73) Proprietor: Taiho Kogyo Co., Ltd., Toyota-shi Aichi 471-8502 (JP)
(72) Inventor: SHIBATA, Masato, Toyota-shi Aichi 471-8502 (JP); YAMANE, Kyohei, Toyota-shi Aichi 471-8502 (JP); GOTO, Shingo, Toyota-shi Aichi 471-8502 (JP)
(74) Representative: Jostarndt Patentanwalts-AG
(86) International application number: PCT/JP2013/058583
(87) International publication number: WO 2013/146682

(56) References cited:
- EP-A1- 1 985 856
- EP-A2- 0 926 340
- EP-A2- 1 236 897
- WO-A1-2007/091564
- JP-A- 2002 021 719
- JP-A- 2002 317 759
- JP-A- 2003 042 061

## Description

### TECHNICAL FIELD

The present invention relates to a swash plate, more particularly, to a swash plate of a swash plate-type compressor, having a coating layer that serves as a sliding layer for the surface of the substrate.

### BACKGROUND ART

In the prior art, a swash plate with a resin film layer (coating layer) formed on the surface of a substrate, whereby the resin film layer serves as a sliding layer, has been proposed as a swash plate of a swash plate-type compressor (for example Patent Literature 1 to Patent Literature 3). In this type of prior-art swash plate, a swash plate that is rotated by a rotary shaft slides with a shoe that serves as a mating member when the swash plate rotates, then lubricating oil is supplied from the inner peripheral side of the swash plate, and the sliding parts of both members are lubricated.

In Patent Literature 4, a compressor swash plate (8), which is lead-free and is able to demonstrate a superior durability, includes a base member (81) and a sliding layer (82) being formed on the surface of the base member (81) and constituting at least a sliding surface (8a) for allowing a shoe (21) to slide thereon. The sliding layer (82) is formed by thermal spraying Cu-based-MnS by HVOF (High Velocity Oxygen Fuel) thermal spraying method. A method of manufacturing the said compressor swash plate.

In Patent Literature 5, A single-headed piston type swash-plate-operated refrigerant compressor is provided with a swash plate mounted on a rotatable drive shaft and having front and rear opposite surfaces, single headed pistons arranged on the rear side of the swash plate to reciprocate in respective cylinder bores, and front and rear shoes to be held in slide-contact with the peripheral parts of the front and rear surfaces of the swash plate to engage a tail end part of each of the single headed pistons with the swash plate in which the front and rear surfaces of the swash plate are provided with respective uppermost layers having physical surface properties different from one another.; A front uppermost and a rear uppermost layer of the swash plate are formed of a sprayed coating of, for example, a copper-base material and the rear uppermost layer is coated by a solid lubricant layer containing a solid lubricant, such as molybdenum disulfide, at least in a part of the solid lubricant. The thickness of the solid lubricant layer is measured and controlled by using the surface of the front layer as a reference plane.

### Citation List

### PATENT Literature

PTL 1: Japanese Laid Open Patent Publication No. 2002-317759
PTL 2: Japanese Laid Open Patent Publication No. 2003-42061
PTL 3: Japanese Laid Open Patent Publication No. 2003-184743
PTL 4: European Patent Application EP 1 985 856 A1
PTL 5: European Patent Application EP 0 926 340 A2

### SUMMARY OF THE INVENTION

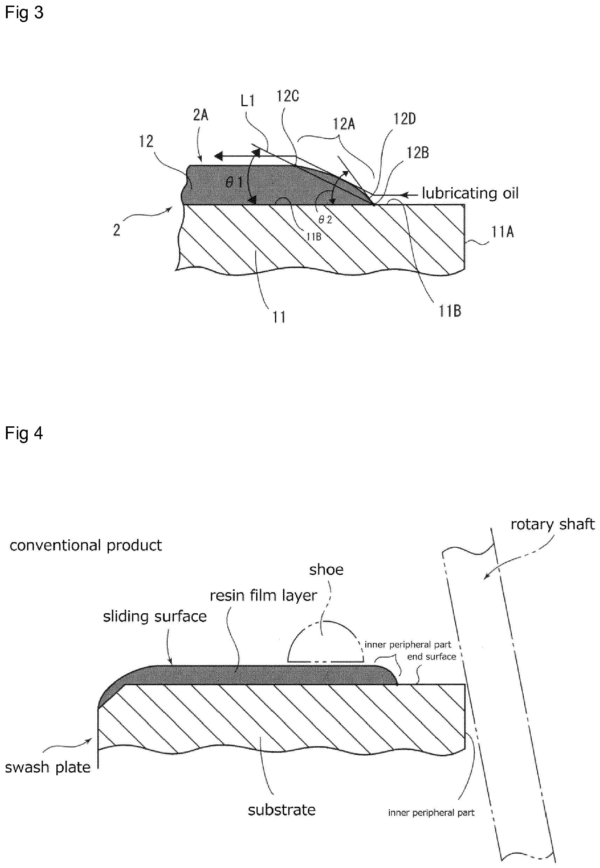

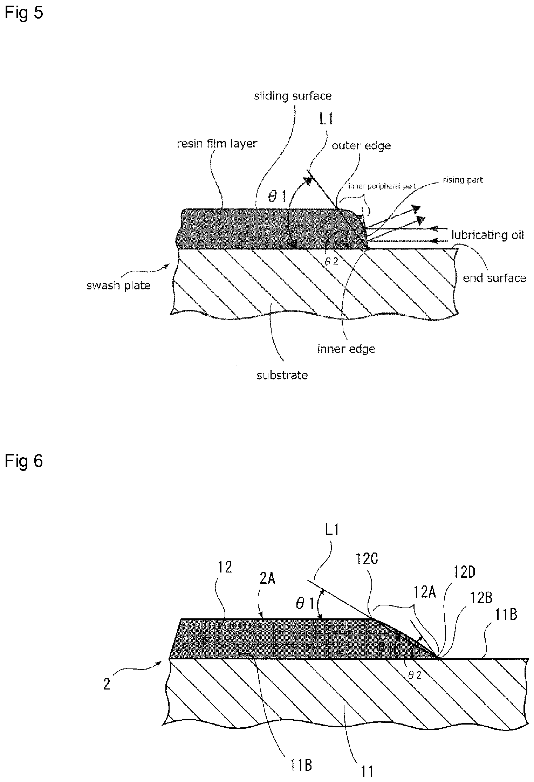

When it comes to a prior-art swash plate having a resin film layer as described above, a problem arises when a lubricating oil is supplied to a surface of a sliding layer from the inner peripheral side of the swash plate, since it is difficult to supply the lubricating oil to the entire area of the surface of the sliding layer As is shown in Fig. 4 and Fig. 5, in the prior-art swash plate, a resin film layer is formed on the surface of the substrate, whereby the substrate is exposed more on an inner side than on an inner peripheral part of the resin film layer. Moreover, the cross section in the radial direction of the inner peripheral part of the resin film layer has a step which rises by more than 40° with respect to the end face of the substrate. More specifically, there is an imaginary straight line L1 connecting an inner edge which is adjacent to the end face of the substrate in the inner peripheral part, and an outer edge which is adjacent to the surface of the sliding layer in the inner peripheral part, and an angle θ1 between the imaginary straight line L1 and the end face of the substrate is 40° or more. Furthermore, an angle θ2 between a rising part which is an adjacent section of the inner edge of the inner peripheral part and the end face of the substrate is an angle of approximately 90°. As a result, in the prior-art swash plate, when the lubricating oil is supplied from the inner peripheral side and moves to the surface of the sliding layer in a circumferential direction outward along the end face of the substrate on which the lubricating oil is exposed, the oil tends to be deflected back from the step of the inner peripheral part of the resin film layer (see Fig. 5). As a result, in the prior-art swash plate, a problem arises when the lubricating oil travels over the inner peripheral part of the resin film layer and is not properly supplied to the surface of the sliding layer in the radially outward direction. Therefore, the prior-art swash plate has been found to have a drawback, namely, that it tends to seize up due to insufficient lubrication.

### MEANS FOR ACHIEVING THE OBJECTIVE

Before this backdrop, the present invention provides a swash plate comprising a disc-shaped substrate, and a coating layer applied to a surface of the substrate, said coating layer serving as a sliding layer for the surface that slides along a shoe and has an inner peripheral part that serves as a slanted surface whose outer edge faces in a radially outwards direction, and the outer edge serves as a part on the inner peripheral part of the sliding layer with respect to an inner edge which is adjacent to an end face of the substrate, as a result of which the slanted surface is formed in such a way that an angle θ1 exists which is formed between an imaginary straight line connecting the inner edge and the outer edge of the sliding layer and the end face of the substrate which is set to 10° or less, and another angle θ2 exits which is formed between a tangent of the rising part adjacent to the inner edge and the end face and that is set to 20° or less, and another angle exits that is formed between the end face of the substrate and any given section of the slanted surface and that is less than 90°.

### EFFECTS OF THE INVENTION

In this arrangement, the inner peripheral part of the coating layer serves as the slanted surface as described above. As a result, when the lubricating oil is supplied from the inner peripheral side (of the substrate) of the swash plate, the oil travels over the inner peripheral part which serves as the slanted surface without being hindered, and is supplied to the outside of the sliding layers. Therefore, it is possible to prevent insufficient lubrication on the surface of the sliding layer, as a result of which the swash plate can be satisfactorily prevented from seizing up.

### BRIEF DESCRIPTION OF THE DRAWINGS

Fig. 1 is a front view of the main parts in a first embodiment of the present invention.
Fig. 2 is a cross-sectional view showing the main parts of the swash plate shown in Fig. 1.
Fig. 3 is an enlarged view of the main parts in Fig. 2.
Fig. 4 is a cross-sectional view showing the main parts of a swash plate of a prior-art product.
Fig. 5 is an enlarged view of the main parts in Fig. 4.
Fig. 6 is a cross-sectional view of the main parts in a second embodiment of the present invention.
Fig. 7 is a cross-sectional view of the main parts in a third embodiment of the present invention.
Fig. 8 is a cross-sectional view of the main parts in a fourth embodiment of the present invention.
Fig. 9 is a cross-sectional view of the main parts in a fifth embodiment of the present invention.
Fig. 10 is a cross-sectional view of the main parts in a sixth embodiment of the present invention.

### DESCRIPTION OF THE EMBODIMENTS

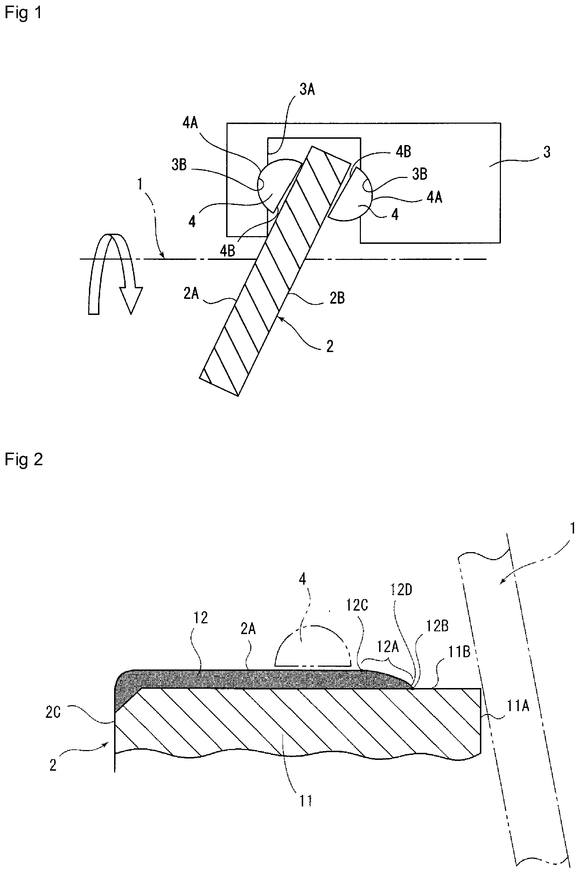

In order to explain the present invention with reference to the illustrated embodiments below, Fig. 1 shows the main parts of a swash plate-type compressor. The swash plate-type compressor has a disc-shaped swash plate 2 that is attached in such a way as to be slanted towards an outer peripheral part of a rotary shaft 1, a plurality of pistons 3 is arranged along the rotary shaft 1, and the outer peripheral part of the swash plate 2 is surrounded by a cutout 3A at one end, and a plurality of hemispherical shoes 4 is arranged between a front surface 2A and rear surface 2B of the swash plate 2 and a pair of hemispherical recesses 3B, where 3B is formed within the cutout 3A of each piston 3. The shoe 4 is arranged with a hemispherical surface 4A which engages with the recess 3B of the piston 3, and a flat endface 4B which slides along the front surface 2A or the rear surface 2B, which are sliding layers of the swash plate 2. The shoe 4 is made of SUJ2, welded to the hemispherical surface 4A and end face 4B and it subsequently undergoes a finishing process. When the swash plate 2 rotates due to the rotation of the rotary shaft 1, the hemispherical surface 4A of a pair of shoes 4 and the recesses 3B, 3B of the piston 3 slide concurrently with the sliding of the front surface 2A or rear surface 2B, which are sliding layers of the swash plate 2, and the end face 4B of a pair of shoes 4, so that each piston 3 is configured so as to execute a reciprocating motion in the axial direction of the rotary shaft 1. In addition, when the rotary shaft 1 and the swash plate 2 rotate, lubricating oil is supplied from the inner peripheral part of the swash plate 2 through which the rotary shaft 1 passes, and, during the rotation of the swash plate 2, the lubricating oil is supplied to the front surface 2A and rear surface 2B, which are sliding layers.

As is shown in Fig. 2 and Fig. 3, the swash plate 2 of the present embodiment comprises a disc-shaped substrate 11 with a through-hole 11A drilled in the center through which the rotary shaft 1 passes, and a resin film layer 12 as a coating layer on each end face 11 B of the substrate 11. Fig. 2 and Fig. 3 only show the end face 11 B which serves as the front surface 2A, and the resin film layer 12 which is applied thereto, whereby the rear surface 2B is not shown here. The substrate 11 is made of an iron-based material and is dimensioned with the same thickness throughout. The through-hole 11A in the substrate 11 serves as an inner peripheral part of the swash plate 2. The resin film layer 12, as a coating layer, is configured to cover an area that extends further in an outer direction than the through hole 11A from the outer peripheral part (outer peripheral part 2C of the swash plate 2) of the end face 11 B. Therefore, the end face 11 B which serves as an adjacent outer part of the through hole 11A is exposed in a circumferential direction over the entire area.

In the present embodiment, whenever the swash plate 2 comprises the arrangement described above, the inner peripheral part 12A of the resin film layer 12 is a slanted surface which the lubricating oil readily travels over and consequently, the lubricating oil can easily be supplied to the front surface 2A and the rear surface 2B, which are sliding layers. More specifically, in the resin film layer 12 of the present embodiment, the thickness of sections other than the inner peripheral part 12A and outer peripheral part are dimensioned with the same thickness, more specifically, between 2µm and 50µm. The inner peripheral part 12A serves as a slanted surface, whereby an outer edge 12C, which serves as a part of the inner peripheral edge of the surface 2A (sliding layer), is located in a radially outwards direction with respect to an inner edge 12B which serves as a boundary with the end face 11B exposed on the substrate 11. In addition, an angle θ1, which is formed between an imaginary straight line L1 connecting the inner edge 12B and the outer edge 12C of the inner peripheral part 12A and the end face 11 B of the substrate 11 is set to 10° or less. In addition, an angle θ2, which is formed between the rising part 12D adjacent to sections of the inner edge 12B and the end face , is set to 20° or less, and an angle formed between the end face of the substrate and any given section of the slanted surface and that is less than 90°. In order to obtain a more favorable effect, the angle θ1 is set to 5° or less and the angle θ2 is set to 15° or less. In addition, as a method for covering the end surface 11 B of the substrate 11 with the resin film layer 12, as described above, it is possible to use the following method that is to say, it is possible to employ spray coating, roll coating and stamp coating. Furthermore, it is even more preferable to form the resin film layer 12 by spin coating. In the case of spin coating, first a resin coating is applied onto both end faces 11 B of the substrate 11 by roll coating; subsequently, the substrate 11 is secured in a rotation machine and rotated at an appropriate rotational speed for a desired period of time. In this way, the resin coating flows to the outer peripheral side from the inner peripheral side of the end face of the substrate 11 by centrifugal force, and it is possible to form the resin film layer 12, which has the structure described above.

The swash plate 2 of the present embodiment is structured as described above. In the swash plate 2 in the present embodiment as described above, the inner peripheral part 12A of the resin film layer 12 has a slanted surface which the lubricating oil can easily travel over. Therefore, when the lubricating oil is supplied from the through hole 11A (inner peripheral part of the swash plate 2) of the substrate 11, the lubricating oil travels without any hindrance over the inner peripheral part 12A of the resin film layer 12 which serves as a slightly sloping slanted surface, and is supplied to the front surface 2A as well as the rear surface 2B (sliding layer), which are on the outside. Therefore, it is possible to prevent the front surface 2A and the rear surface 2B, which are sliding layers, from being insufficiently lubricated. As a result, it is possible to satisfactorily prevent the swash plate 2 from seizing up due to insufficient lubrication.

Fig. 6 shows the main parts of the swash plate 2 in a second embodiment of the present invention. In the second embodiment, as compared to the first embodiment, the radial dimensions of the rising part 12D are reduced, and an outline of a cross section in the radial direction of the inner peripheral part 12A is a slanted surface which is approximately arc-shaped. There is no change in other parts of this arrangement vis-à-vis the first embodiment shown in Fig. 3, and the same reference numeral designates each member corresponding to the first embodiment. In the swash plate 2 of the second embodiment as described above, it is also possible to obtain the same advantageous effects as the first embodiment.

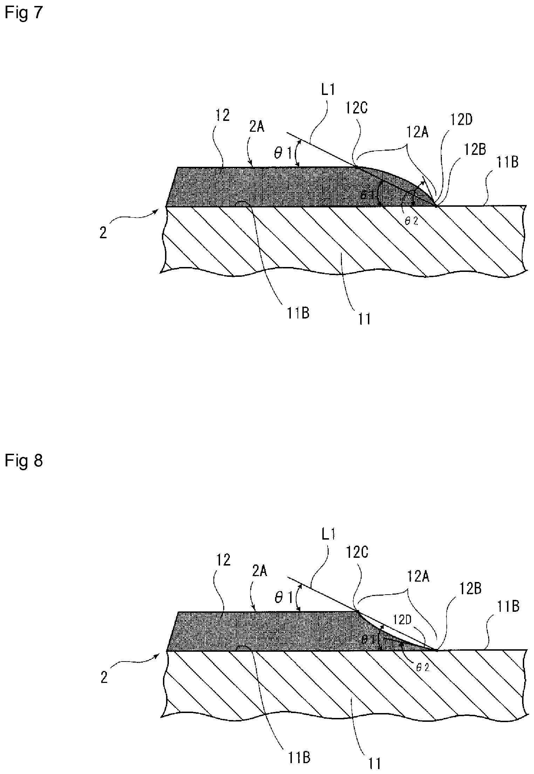

Fig. 7 shows the main parts of the swash plate 2 in a third embodiment of the present invention. The third embodiment is obtained by a three-fold enlargement of the inner peripheral part 12A of the resin film layer 12 as compared to that of the second embodiment shown in Fig. 6. Therefore, the curvature of the outline of the cross section, which is a slanted surface, has a larger approximately arc shape than the second embodiment does. There is no change in other parts of this arrangement vis-à-vis the first embodiment, and the same reference numeral designates each member corresponding to the first embodiment. In the third embodiment, it is also possible to obtain the same advantageous effects as the first embodiment.

Fig. 8 shows the main parts of the swash plate 2 in a fourth embodiment of the present invention. In the fourth embodiment, the inner peripheral part 12A of the resin film layer 12 acquires an approximately arc-shaped slanted surface, wherein its cross section in the radial direction is concave. As a result, in the fourth embodiment, the angle θ2 of the rising part 12D is smaller than the angle θ1, which is formed between the imaginary straight line L1 and the end face 11B. There is no change in other parts of this arrangement vis-à-vis the first embodiment shown in Fig. 3 described above, and the same reference numeral designates each member corresponding to the first embodiment. In the fourth embodiment, it is also possible to obtain the same advantageous effects as the first embodiment.

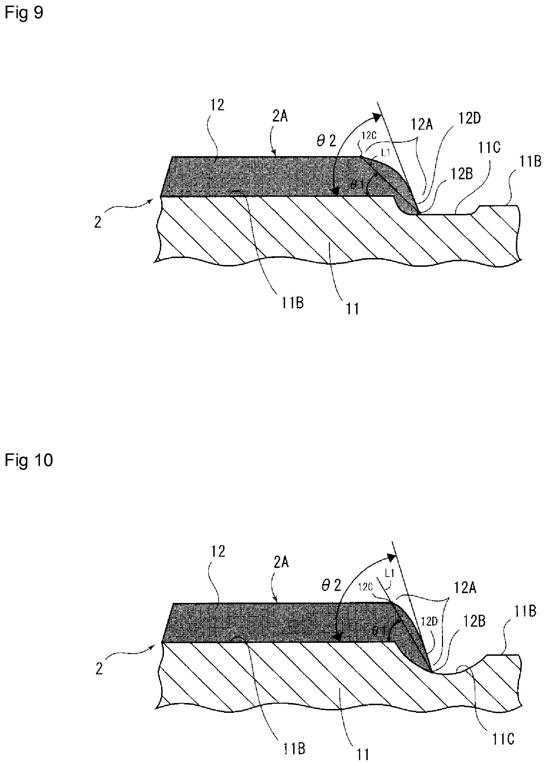

Fig. 9 shows the main parts of the swash plate 2 in a fifth embodiment of the present invention. In the fifth embodiment, an annular groove 11C is formed in a circumferential direction in a position adjacent to the inner peripheral part 12A of the resin film layer 12 at the end face 11B of the substrate 11. Although the bottom part of the annular groove 11C is a flat surface, the cross section of both side walls has a circular arc shape. In addition, the inner peripheral part 12A of the resin film layer 12 is shaped in such a way as to enter the interior of the annular groove 11C beyond one side wall of the annular groove 11C. In the fifth embodiment, in view of the shape of the annular groove 11C, the angles θ1 and θ2 become larger than those in the embodiments described above. There is no change in other parts of this arrangement vis-à-vis the first embodiment shown in Fig. 3 described above, and the same reference numeral designates each member corresponding to the first embodiment. In the fifth embodiment, it is also possible to obtain the same advantageous effects as the first embodiment.

Fig. 10 shows the main parts of the swash plate 2 in a sixth embodiment of the present invention. The sixth embodiment is an embodiment similar to the fifth embodiment shown in Fig. 9 wherein the cross sectional shape of the annular groove 11C of the fifth embodiment is formed in such a way so as to be arc-shaped. In addition, the inner peripheral part 12A of the resin film layer 12 is formed in such a way that it enters the annular groove 11C up to a position approximately in the center. Other parts of this arrangement are the same as in the fifth embodiment, and the same reference numeral designates each member corresponding to the fifth embodiment. In the sixth embodiment, it is also possible to obtain the same advantageous effects as the first embodiment. Furthermore, in each embodiment described above, although it is assumed that the resin film layer 12 is a coating layer, a product other than a resin film layer may also be used as the coating layer.

### EXPLANATION OF THE SYMBOLS

- 2: swash plate
- 2A: front surface (sliding layer)
- 2B: rear surface (sliding layer)
- 12: resin film layer (coating layer)
- 12A: inner peripheral part
- 12B: inner edge
- 12C: outer edge
- 12D: rising part

### INDUSTRIAL APPLICATION OF THE INVENTION

The present invention is a swash plate of a swash plate-type compressor and can be used as a swash plate having a coating layer that serves as a sliding layer

## Claims

1. A swash plate comprising: a disc-shaped substrate (11) and
a coating layer applied to a surface of the substrate, said coating layer serving as a sliding layer that slides along a shoe;
**characterized in that**
an inner peripheral part (12A) of the coating layer serves as a slanted surface whose outer edge faces in a radially outwards direction, and the outer edge serves as a part on the inner peripheral part of the sliding layer with respect to an inner edge which is adjacent to an end face of the substrate (11), as a result of which the slanted surface is formed in such a way that an angle θ1 exists which is formed between an imaginary straight line (L1) connecting the inner edge (12B) and the outer edge (12C) of the sliding layer (12), and the end face (11B) of the substrate (11), that is set to 10° or less, and another angle θ2 exists which is formed between a rising part (12D) adjacent to the inner edge (12B) and the end face (11B) of the substrate that is set to 20° or less, and another angle exists that is formed between the end face (11B) of the substrate (11) and any given section of the slanted surface and that is less than 90°.

2. The swash plate according to claim 1,
**characterized in that** the coating layer comprises a resin film layer (12) and the angle θ1 is set to 5° or less and the angle θ2 is set to 15° or less.

3. The swash plate according to claim 1 or claim 2,
**characterized in that** the slanted surface has a cross section that widens in the radial direction upwards so as to be approximately arc-shaped, or has an arc-shaped cross section that is concave in the radial direction.

4. The swash plate according to claim 1;
**characterized in that** an annular shaped groove (11c) in the circumferential direction is formed on an end face that serves as an adjacent inner part of the coating layer, and the inner peripheral part (12A) of the coating layer is formed to enter the annular shaped groove.

5. The swash plate according to one of claims 1 to 4,
**characterized in that** a thickness of the coating layer is set from 2µm to 50µm.

## Patentansprüche

1. Taumelscheibe, die umfasst: ein scheibenförmiges Substrat (11) und eine Beschichtungsschicht, die auf eine Oberfläche des Substrats aufgetragen ist, wobei die Beschichtungsschicht als eine Gleitschicht dient, die entlang eines Gleitstücks gleitet;
**dadurch gekennzeichnet, dass**
ein Innenumfangsteil (12A) der Beschichtungsschicht als eine geneigte Oberfläche dient, deren Außenrand in einer Richtung radial nach außen weist, und wobei der Außenrand in Bezug auf einen Innenrand, der an eine Stirnfläche des Substrats (11) angrenzt, als ein Teil an dem Innenumfangsteil der Gleitschicht dient, wobei die geneigte Oberfläche im Ergebnis dessen in der Weise gebildet ist, dass es einen Winkel θ1 gibt, der zwischen einer gedachten Geraden (L1), die den Innenrand (12B) und den Außenrand (12C) der Gleitschicht (12) verbindet, und der Stirnfläche (11 B) des Substrats (11) gebildet ist, der auf 10° oder kleiner eingestellt ist, und dass es einen weiteren Winkel θ2 gibt, der zwischen einem ansteigenden Teil (12D), der an den Innenrand (12B) angrenzt, und der Stirnfläche (11 B) des Substrats gebildet ist, der auf 20° oder kleiner eingestellt ist, und dass es einen weiteren Winkel gibt, der zwischen der Stirnfläche (11 B) des Substrats (11) und irgendeinem gegebenen Anschnitt der geneigten Oberfläche gebildet ist und der kleiner als 90° ist.

2. Taumelscheibe nach Anspruch 1,
**dadurch gekennzeichnet, dass** die Beschichtungsschicht eine Harzfilmschicht (12) umfasst und dass der Winkel θ1 auf 5° oder kleiner eingestellt ist und dass der Winkel θ2 auf 15° oder kleiner eingestellt ist.

3. Taumelscheibe nach Anspruch 1 oder Anspruch 2,
**dadurch gekennzeichnet, dass** die geneigte Oberfläche einen Querschnitt aufweist, der sich in der radialen Richtung nach oben verbreitert, sodass er näherungsweise bogenförmig ist, oder einen bogenförmigen Querschnitt aufweist, der in der radialen Richtung konkav ist.

4. Taumelscheibe nach Anspruch 1,
**dadurch gekennzeichnet, dass** in der Umfangsrichtung an einer Stirnfläche eine ringförmige Rille (11 c) gebildet ist, die als ein angrenzender Innenteil der Beschichtungsschicht dient, und dass der Innenumfangsteil (12A) der Beschichtungsschicht in der Weise gebildet ist, dass er in die ringförmige Rille eintritt.

5. Taumelscheibe nach einem der Ansprüche 1 bis 4,
**dadurch gekennzeichnet, dass** eine Dicke der Beschichtungsschicht auf 2 µm bis 50 µm eingestellt ist.

## Revendications

1. Plateau oscillant comprenant : un substrat discoïdal (11) et une couche de revêtement appliquée sur une surface du substrat, ladite couche de revêtement servant en tant que couche coulissante qui coulisse le long d'un patin ;
**caractérisé en ce**
**qu'**une partie périphérique intérieure (12A) de la couche de revêtement sert de surface oblique dont le bord extérieur est orienté dans une direction radialement extérieure, et le bord extérieur sert de partie sur la partie périphérique intérieure de la couche coulissante par rapport à un bord intérieur qui est adjacent à une face d'extrémité du substrat (11), en résultat de quoi la surface oblique est formée de façon à ce qu'un angle θ1 existe qui est formé entre une ligne droite imaginaire (L1) reliant le bord intérieur (12B) et le bord extérieur (12C) de la couche coulissante (12), et la face d'extrémité (11 B) du substrat (11), qui est réglé à 10° ou moins, et un autre angle θ2 existe qui est formé entre une partie en élévation (12D) adjacente au bord intérieur (12B) et la face d'extrémité (11 B) du substrat, qui est réglé à 20° ou moins, et un autre angle existe qui est formé entre la face d'extrémité (11 B) du substrat (11) et toute section donnée de la surface inclinée et qui est inférieur à 90°.

2. Plateau oscillant selon la revendication 1, **caractérisé en ce que** la couche de revêtement comprend une couche de film de résine (12) et l'angle θ1 est réglé à 5° ou moins et l'angle θ2 est réglé à 15° ou moins.

3. Plateau oscillant selon la revendication 1 ou 2, **caractérisé en ce que** la surface inclinée présente une section transversale qui s'élargit dans la direction radiale vers le haut de façon à être approximativement arquée, ou présente une section transversale arquée qui est concave dans la direction radiale.

4. Plateau oscillant selon la revendication 1, **caractérisé en ce qu'**une rainure annulaire (11c) dans la direction circonférentielle est formée sur une surface d'extrémité qui sert en tant que partie intérieure adjacente de la couche de revêtement, et la partie périphérique intérieure (12A) de la couche de revêtement est formée pour pénétrer dans la rainure annulaire.

5. Plateau oscillant selon l'une des revendications 1 à 4, **caractérisé en ce qu'**une épaisseur de la couche de revêtement est réglée de 2 µm à 50 µm.
